# EUROPÄISCHE PATENTANMELDUNG

(11) **EP 3 566 563 A1**
(43) Veröffentlichungstag der Anmeldung: **13.11.2019**
(21) Anmeldenummer: 19155633.1
(22) Anmeldetag: 06.02.2019
(51) Int. Cl.: A01D 41/127, G05B 13/02

(54) **MÄHDRESCHER**

(30) Priorität: 08.05.2018 DE 102018111076
(71) Anmelder: CLAAS Selbstfahrende Erntemaschinen GmbH, 33428 Harsewinkel (DE)
(72) Erfinder: Vöcking, Henner, 33397 Rietberg (DE); Wilken, Andreas, 49143 Bissendorf (DE); Baumgarten, Joachim, 48361 Beelen (DE); Bormann, Bastian, 33334 Gütersloh (DE); Bussmann, Christoph, 33428 Harsewinkel (DE); Terörde, Stefan, 48231 Warendorf (DE); Berger, Arthur, 49143 Bissendorf (DE); Dieckmeyer, Sascha, 49326 Melle (DE)
(74) Vertreter: CLAAS Gruppe

(57) **Zusammenfassung**

Die vorliegende Erfindung betrifft einen Mähdrescher (1), umfassend mehrere Arbeitsorgane (16) zur Durchführung spezifischer Teilbearbeitungsprozesse eines Gesamtbearbeitungsprozesses zur Verarbeitung von Erntegut, sowie
- ein Fahrerassistenzsystem (18) zur Ansteuerung der Arbeitsorgane (16), welches einen Speicher (26) zum Hinterlegen von Daten (26a, 26b) und eine Rechenvorrichtung (27) zur Verarbeitung der im Speicher (26) hinterlegten Daten (26a, 26b) aufweist, wobei das Fahrerassistenzsystem (18) mit den jeweiligen zur Durchführung der Teilbearbeitungsprozesse vorgesehenen Arbeitsorganen (16) eigenständig arbeitende Einstellautomaten (20) bildet, welche der Optimierung der Ansteuerung der Arbeitsorgane (16) zur Durchführung der Teilarbeitsprozesse dienen, wobei zu einer Ansteuerung einzelner Einstellautomaten (20) und eines Datenaustausches der Einstellautomaten (20) untereinander dem Fahrerassistenzsystem (18) ein Prozesssupervisor (28) zugeordnet ist

## Beschreibung

Die vorliegende Erfindung betrifft einen Mähdrescher gemäß dem Oberbegriff des Anspruches 1.

Mähdrescher dienen der Mahd und dem Drusch von Körnerfrüchten als Erntegut. Hierzu umfasst der Mähdrescher mehrere Arbeitsorgane zur Durchführung spezifischer Teilbearbeitungsprozesse eines Gesamtbearbeitungsprozess zur Verarbeitung von Erntegut Dabei erfolgt der Drusch durch eine Dreschvorrichtung, welches aus dem von dem Mähdrescher durch ein Vorsatzgerät, insbesondere ein Schneidwerk, aufgenommenen Erntegut Korngut gewinnt, das nach dem Dreschen einer Abscheidung durch eine Abscheidevorrichtung und einer anschließenden Reinigung durch eine Reinigungsvorrichtung einem Korntank zugeführt wird. Als weitere Bestandteile des Ernteguts bleiben weiter z. B. die Spreu und das Stroh übrig, welche entweder gemeinsam mit dem von einer Häckselvorrichtung zerkleinerten Stroh über das Feld verteilt oder - im Falle des Strohs - auf Schwad z.B. zur späteren Aufnahme durch eine Ballenpresse gelegt werden können. Das Einstellen der verschiedenen Arbeitsorgane stellt an eine Bedienperson hohe Anforderungen, da Änderungen eines Einstellparameters sich bereits innerhalb eines Arbeitsorgans auf andere Einstellparameter bzw. Prozessqualitätsparameter auswirken. So kann beispielsweise die Anhebung der Drehzahl einer Dreschtrommel der Dreschvorrichtung zu einer Erhöhung des Durchsatzes an Erntegut, zugleich erhöht sich aber auch der Anteil an Bruchkorn führen.

Aus der DE 10 2013 106 133 A1 ist ein Mähdrescher gemäß dem Oberbegriff des Anspruches 1 bekannt. Der aus der DE 10 2013 106 133 A1 bekannte Mähdrescher weist ein Fahrerassistenzsystem zur Ansteuerung der Arbeitsorgane auf, welches einen Speicher zum Hinterlegen von Daten, eine Rechenvorrichtung zur Verarbeitung der im Speicher hinterlegten Daten, sowie eine grafische Benutzerschnittstelle umfasst. Zur Ansteuerung einer Abscheidevorrichtung und einer Reinigungsvorrichtung ist jeweils ein Einstellautomat vorgesehen. Diese Einstellautomaten arbeiten unabhängig voneinander, um das jeweilige Arbeitsorgan in einem optimalen Betriebspunkt zu betreiben. Die Einstellautomaten werden vom Fahrerassistenzsystem automatisch aktiviert, sie lassen sich jedoch durch eine Bedienperson wahlweise aktivieren oder deaktivieren. Während die Arbeitsorgane Abscheidevorrichtung und Reinigungsvorrichtung durch die Einstellautomaten angesteuert werden, um einen optimalen Betrieb unter gegebenen Betriebsbedingungen zu erreichen, obliegt es der Bedienperson die übrigen Arbeitsorgane einzustellen. Dazu muss die Bedienperson auf Änderungen durch einen oder beide Einstellautomaten angemessen und zeitnah reagieren können. Eine wirkungsvolle Gesamtmaschinenregelung lässt sich auf diese Weise nicht realisieren.

Ausgehend von dem Stand der Technik liegt der Erfindung die Aufgabe zugrunde, einen Mähdrescher mit Fahrerassistenzsystem weiterzubilden und zu verbessern, dass eine Gesamtmaschinenregelung bei besonders geringer Beanspruchung der Bedienperson möglich ist.

Diese Aufgabe wird durch einen Mähdrescher gemäß den Merkmalen des Anspruches 1 gelöst.

Vorteilhafte Weiterbildungen sind Gegenstand der Unteransprüche.

Gemäß dem Anspruch 1 wird ein Mähdrescher vorgeschlagen, der mehrere Arbeitsorgane zur Durchführung spezifischer Teilbearbeitungsprozesse eines Gesamtbearbeitungsprozesses zur Verarbeitung von Erntegut sowie ein Fahrerassistenzsystem zur Ansteuerung der Arbeitsorgane, welches einen Speicher zum Hinterlegen von Daten und eine Rechenvorrichtung zur Verarbeitung der im Speicher hinterlegten Daten aufweist, umfasst. Um eine Gesamtmaschinenregelung bei besonders geringer Beanspruchung der Bedienperson zu ermöglichen, ist vorgesehen, dass das Fahrerassistenzsystem mit den jeweiligen zur Durchführung der Teilbearbeitungsprozesses vorgesehenen Arbeitsorganen eigenständig arbeitende Einstellautomaten bildet, welche der Optimierung der Ansteuerung der Arbeitsorgane zur Durchführung der Teilarbeitsprozesse dienen, wobei zu einer Ansteuerung einzelner Einstellautomaten und eines Datenaustausches der Einstellautomaten untereinander dem Fahrerassistenzsystem ein Prozesssupervisor zugeordnet ist. Wesentlich dabei ist, dass zumindest die Arbeitsorgane, die zur Durchführung spezifischer Teilbearbeitungsprozesse zur Verarbeitung von Erntegut beitragen, jeweils durch einen eigenständig arbeitenden Einstellautomaten angesteuert werden, deren Teilnahme am Gesamtbearbeitungsprozess sowie das Ermöglichen eines Datenaustausches untereinander durch den Prozesssupervisor bestimmt wird. Dem Prozesssupervisor kommt die Aufgabe zu, den Gesamtbearbeitungsprozess zu optimieren, indem dieser gezielt Einfluss auf die Einstellautomaten nimmt.

Hierzu kann der Prozesssupervisor dazu eingerichtet sein, den Gesamtbearbeitungsprozess des Mähdreschers gemäß einer Ernteprozessstrategievorgabe durch eine aufeinander abgestimmte Ansteuerung einzelner Einstellautomaten autonom zu optimieren. Die Ernteprozessstrategievorgabe kann dem Fahrerassistenzsystem aus einer Auswahl an Ernteprozessstrategievorgaben vorgegeben werden. Als auswählbare Ernteprozessstrategievorgaben kommen beispielsweise das Erzielen eines maximalen Durchsatzes, eine zu erreichende Qualität des Erntegutes, ein effizienter oder Ausbalancierter Betrieb des Mähdreschers und dergleichen mehr in Betracht. Die auswählbaren Ernteprozessstrategien sind auch untereinander kombinierbar, beispielsweise durch Gewichtung einzelner Ernteprozessstrategien. Der Prozesssupervisor kann sich an der ausgewählten Ernteprozessstrategievorgabe orientieren, um autonom die von den Arbeitsorganen durchzuführenden Teilbearbeitungsprozesse durch eine dezidierte Ansteuerung einzelner Einstellautomaten zu optimieren.

Dabei können zur Durchführung eines jeweiligen Teilbearbeitungsprozesses mehrere unterschiedliche Teilstrategien hinterlegt sein, die von den jeweiligen Einstellautomaten zur Optimierung des diesen zugeordneten Arbeitsorgans heranziehbar sind. Teilstrategien können Vorgaben der einzelnen Einstellautomaten für Grenzen von Bewertungsgrößen und/oder Einstellgrößen, Gewichtungen, Zielwerten und/oder Prioritäten sein.

Bevorzugt kann zur Ansteuerung einzelner Einstellautomaten und des Datenaustausches der Einstellautomaten untereinander durch den Prozesssupervisor zumindest ein Regelungsprozess hinterlegt sein, welcher bestehende Abhängigkeiten zwischen Einstellparametern und Prozessqualitätsparametern der Teilbearbeitungsprozesse untereinander umfasst. Bevorzugt kann der zumindest eine Regelungsprozess in dem Speicher des Fahrerassistenzsystems hinterlegt sein. Der zumindest eine Regelungsprozess kann auf Grundlage eines Regelwerkes oder einer Reglerstruktur erfolgen. Unter Einstellparametern sind arbeitsorganspezifische Maschinenparameter zur Einstellung von Erntegutbehandlungsmitteln durch zumindest eine den Erntegutbehandlungsmitteln zugeordnete Aktuatorik zu verstehen, welche von den Einstellautomaten eigenständig ermittelt werden. Einstellparameter des Arbeitsorgans Vorsatzgeräte respektive Schneidwerk sind unter anderem Messerbalkenhöhe, Schnittwinkel, Haspelposition und dergleichen mehr. Erntegutbehandlungsmittel im Fall des Schneidwerks sind beispielsweise Messerbalken, Haspel, Einzugswalze und dergleichen, denen eine Aktuatorik zugeordnet ist, um diese Erntegutbehandlungsmittel einzustellen und/oder zu betreiben. Unter dem Begriff Prozessqualitätsparametern sind im Fall des Arbeitsorganes Schneidwerks Aufnahmeverluste, Schnittährenverluste, Spritzkörnerverluste, etc. zu verstehen. Prozessqualitätsparameter sind ein Bewertungskriterium für eine optimale Einstellung des Arbeitsorgans durch den Einstellautomaten. Entsprechendes gilt für die weiteren zur Durchführung von Teilbearbeitungsprozessen vorgesehenen Arbeitsorgane des Mähdreschers.

Weiterhin kann der Prozesssupervisor dazu eingerichtet sein, einen oder mehrere Einstellautomaten koordiniert anzusteuern und betriebssituationsabhängig eine Gewichtungsverschiebung in der Erreichung oder Einhaltung von Prozessqualitätsparametern zumindest eines Einstellautomaten durchzuführen. Um den Gesamtbearbeitungsprozess des Mähdreschers zu optimieren, kann es erforderlich sein, die Erreichung bzw. Einhaltung eines Prozessqualitätsparameters des einen Arbeitsorgans der Erreichung bzw. Einhaltung eines Prozessqualitätsparameters anderen Arbeitsorgans unterzuordnen, indem die Gewichtung verändert wird. Die Vorgabe der Ernteprozessstrategie, die auf einen maximalen Durchsatz an Erntegut gerichtet ist, führt dazu, dass die jeweiligen Arbeitsorgane durch entsprechende, von den korrespondierenden Einstellautomaten eigenständig bestimmten Einstellparameter angesteuert werden, um jeweils einen maximalen Durchsatz zu gewährleisten. Entsprechend dieser Ernteprozessstrategievorgabe "maximaler Durchsatz" findet eine entsprechende Gewichtung der Prozessqualitätsparameter der jeweiligen Arbeitsorgane statt, indem unter anderem höhere Erntegutverluste und/oder Qualitätsverluste in Kauf genommen werden, als dies bei der Ernteprozessstrategievorgabe "Qualität des Erntegutes" der Fall ist. Dies kann jedoch dazu führen, dass es innerhalb einzelner Teilbearbeitungsprozesse zu einer Überlastung des Arbeitsorgans kommen kann, wodurch die Erreichung der Ernteprozessstrategievorgabe "maximaler Durchsatz" gefährdet wird. Durch eine betriebssituationsabhängige Ausbalancierung der Gewichtung wird gewährleistet, dass es zu einer aufeinander abgestimmten Gesamtoptimierung aller Arbeitsorgane des Mähdreschers kommt.

Des Weiteren kann der Prozesssupervisor dazu eingerichtet sein, aufgrund der Gewichtungsverschiebung den zumindest einen Einstellautomaten derart anzusteuern, um das betreffende, von dem jeweiligen Einstellautomaten angesteuerte Arbeitsorgan außerhalb des jeweiligen optimalen Betriebspunktes zu betreiben. Dem Betreiben zumindest eines Arbeitsorgans außerhalb seines jeweiligen optimalen Betriebspunktes liegt der Gedanke zugrunde, mögliche Auswirkungen der für das Arbeitsorgan spezifischen Einstellungen auf andere, insbesondere nachgeordnete, Arbeitsorgane zu minimieren, die der Erreichung einer Gesamtoptimierung im Rahmen der gewählten Ernteprozessstrategievorgabe entgegenstehen.

Weiterhin kann der Prozesssupervisor zur Vorgabe von abweichenden Teilstrategien für zumindest einen der Einstellautomaten eingerichtet sein. Dies kann dann der Fall sein, wenn die Erreichung einer Gesamtoptimierung im Rahmen der gewählten Ernteprozessstrategievorgabe und der zugehörigen originären Teilstrategien in Folge sich ändernder äußerer Rahmenbedingungen nicht eingehalten werden kann.

Des Weiteren kann der Prozesssupervisor zur autonomen Vorgabe von Einstellgrenzen eingerichtet sein, innerhalb derer die Einstellautomaten die jeweiligen Arbeitsorgane ansteuern. Alternativ oder zusätzlich kann der Prozesssupervisor zur autonomen Vorgabe von Zielwerten der Prozessqualitätsparameter eingerichtet sein, innerhalb derer die Einstellautomaten die jeweiligen Arbeitsorgane ansteuern. So kann eine Reduzierung eines Bruchkornanteils als Prozessqualitätsparameter dadurch erreicht werden, dass der Zielwert für den Prozessqualitätsparameter Kornanteil in der Überkehr reduziert wird. Dies ist beispielsweise durch eine Erhöhung des Prozessqualitätsparameters Ausdrusch erreichbar, indem der dem Arbeitsorgan Dreschvorrichtung zugeordnete Einstellautomat die Einstellparameter entsprechend verändert. Ein weiteres Beispiel stellt das Absenken der Prozessqualitätsparameter "Verlustgrenze", welcher entsprechend der unterschiedlichen Arbeitsorgane verschiedene Ausprägungen haben kann, bei einem Erreichen eines anderen Grenzwertes der Prozessqualitätsparameter oder der Einstellparameter, wie dem Erreichen der maximalen Motorauslastung, dar. Weiterhin kann der Prozesssupervisor zwischen Maximalwerten und Sollwerten von Prozessqualitätsparametern unterscheiden bzw. kann diese bei der Ansteuerung der Einstellautomaten zugrunde legen. Beispielhaft hierfür sei die Einhaltung der sogenannten Überkehrgrenze als Maximalwert und das Überkehrniveau als Sollwert angeführt.

Insbesondere kann der Prozesssupervisor zur Optimierung des Gesamtbearbeitungsprozesses bei einem Betrieb des Mähdreschers im Teillastbetrieb eingerichtet sein. So kann beispielsweise aufgrund eines fahrgeschwindigkeitsbedingten Teillastbetriebes die Ernteprozessstrategievorgabe "maximaler Durchsatz" nicht erreicht werden. Um dennoch den Gesamtbearbeitungsprozess im Rahmen solcher Randbedingungen zu optimieren, kann der Prozesssupervisor Prioritäten selbsttätig verschieben bzw. neu festlegen.

Bevorzugt kann zur Abbildung funktionaler Zusammenhänge eines von einem Arbeitsorgan durchzuführenden Teilbearbeitungsprozesses mindestens einem Prozessqualitätsparameter zumindest ein adaptives Kennlinienfeld zugeordnet sein, wobei dieser mindestens eine Prozessqualitätsparameter als Ausgangsgröße des zumindest einen Kennfeldes definiert sein kann. Anhand dieses funktionalen Zusammenhangs eines Systemmodells für ein jeweiliges Arbeitsorgan kann in Abhängigkeit von unterschiedlichen Betriebssituationen jeweils auf Einstellparameter geschlossen werden, die eine optimierte Durchführung des Teilbearbeitungsprozesses ermöglichen.

Weiterhin kann der Prozesssupervisor zum Empfang von externen Daten eingerichtet sein, welche einen Einfluss auf die Prozessqualitätsparameter der Teilbearbeitungsprozesse haben. Bei den externen Daten kann es sich vorzugsweise um Daten und Informationen handeln, die äußere, nicht direkt durch Sensorsysteme des Mähdreschers messbare Einflüsse auf den Gesamtbearbeitungsprozess darstellen. Solche Einflüsse sind beispielsweise das Wetter und/oder Terminvorgaben, welche ein zur Verfügung stehendes Zeitfenster für das Ernten eines Feldes beeinflussen bzw. beschränken. Externe Daten sind somit unter anderem aktuelle Wetterdaten sowie Logistikdaten, welche einen Einfluss auf die Durchführung des Gesamtbearbeitungsprozesses haben können. Zu den externen Daten kann aber auch eine unmittelbare Eingabe durch die Bedienperson des Mähdreschers oder eine mittelbare Eingabe durch eine Bedienperson, die entfernt Zugriff auf das Fahrerassistenzsystem hat, beispielsweise von einer Hofstelle aus, zählen. Logistikdaten umfassen beispielsweise Terminvorgaben für das Abernten eines Schlages oder die Koordination des Mähdreschers als einem Erntefahrzeug innerhalb einer mehrere Ernte-und/oder Transportfahrzeuge umfassenden Erntelogistikkette. Hierzu kann der Prozesssupervisor externe Daten eines Flottenmanagementsystems empfangen, welche neben Informationen zu einem zu bearbeitenden Schlag auch Informationen über die vorhandenen Transportquantitäten enthalten. Externe Daten können auch anderen Ernte- oder Transportfahrzeugs der Erntelogistikkette übermittelt werden. Aufgrund dessen kann der Prozesssupervisor einzelne Teilstrategievorgaben der Einstellautomaten anpassen. So kann beispielsweise bei einer begrenzt vorhandenen Transportkapazität der Prozessqualitätsparameter "Durchsatz" des Mähdreschers durch eine entsprechende Ansteuerung der Einstellautomaten darauf abgestimmt werden, während die Zielerreichung anderer Prozessqualitätsparameter, welche die Ergebnisqualität bzw. Verluste der Arbeitsorgane zum Gegenstand haben, durch eine entsprechende Ansteuerung der Einstellautomaten stärker berücksichtigt werden.

Insbesondere kann der Prozesssupervisor zur autonomen Ableitung von Maßnahmen in Abhängigkeit von den empfangenen externen Daten eingerichtet sein. So kann der Prozesssupervisor unter Berücksichtigung der externen Daten als eine Maßnahme Teilstrategievorgaben anpassen. Zum Beispiel die Grenzen der Prozessqualitätsparameter verändern oder Teilstrategien der Einstellautomaten verändern. Eine weitere Maßnahme kann das Einplanen von Wartungs- oder Einstellmaßnahmen sein, welche eine Unterbrechung des Erntebetriebes erforderlich machen. Diese können aufgrund der zur Verfügung stehenden Logistikdaten in den Ernteprozessablauf integriert werden, um die Unterbrechung des Erntebetriebes zu minimieren. Beispielhaft seien für derartige Wartungs- oder Einstellmaßnahmen das Überprüfen und/oder Kalibrieren von Sensoren des Mähdreschers, Umbauarbeiten an der Dreschvorrichtung oder sonstige Einstellungen an Arbeitsorganen, die nur ohne Materialfluss im Mähdrescher oder nicht von der Kabine aus durchführbar sind, genannt.

Gemäß der Ausgestaltung des Anspruchs 15 sind als Arbeitsorgane zumindest ein Vorsatzgerät, insbesondere ein Getreideschneidwerk, eine Dreschvorrichtung, eine Abscheidevorrichtung, die als Hordenschüttler oder als eine Axialabscheidevorrichtung mit einem oder zwei Trennrotoren ausgebildet sein kann, eine Reinigungsvorrichtung sowie eine Verteilvorrichtung vorgesehen. Die Verteilvorrichtung kann eine Spreuverteileinrichtung, eine Häckseleinrichtung sowie eine Verteileinrichtung zur Verteilung zumindest des von der Häckseleinrichtung bereitgestellten Erntegutes umfassen.

Dabei können zur Ansteuerung dieser Arbeitsorgane als Einstellautomaten zumindest ein Vorsatzgeräteautomat, ein Dreschautomat, ein Trennautomat, ein Reinigungsautomat sowie ein Verteilautomat vorgesehen sein. Für jeden Teilbearbeitungsprozess sind die funktionalen Zusammenhänge vorzugsweise in dem Speicher des Fahrerassistenzsystems hinterlegt, auf welchen die jeweiligen Einstellautomaten zur autonomen Bestimmung der Einstellparameter des korrespondierenden Arbeitsorgans zugreifen. Dabei werden die funktionalen Zusammenhänge im laufenden Erntebetrieb kontinuierlich auf den aktuellen Ernteprozesszustand abgeglichen.

Weiterhin ist es vorteilhaft, wenn zumindest ein Einstellautomat zumindest zwei Unterautomaten aufweist. Auf diese Weise lässt sich die Komplexität der Regelung von Teilbearbeitungsprozessen eines Arbeitsorganes reduzieren, indem der Teilbearbeitungsprozess feiner untergliedert wird. Dies ist bei der selbsttätigen Bestimmung von Einstellparametern durch die Unterautomaten von Vorteil. So kann der Vorsatzgeräteautomat als Unterautomaten einen Haspelautomaten und einen Einzugsautomaten umfassen, deren Funktionsweise mit der der anderen Einstellautomaten korrespondiert.

Die vorliegende Erfindung wird nachstehend anhand eines in den Zeichnungen dargestellten Ausführungsbeispieles näher erläutert.

Es zeigen:
- Fig. 1: eine schematische Darstellung eines Mähdreschers in Seitenansicht;
- Fig. 2: eine schematische Darstellung des Funktionsprinzips von Einstellautomaten;
- Fig. 3: eine schematische Darstellung des Funktionsprinzips eines Prozesssupervisors.

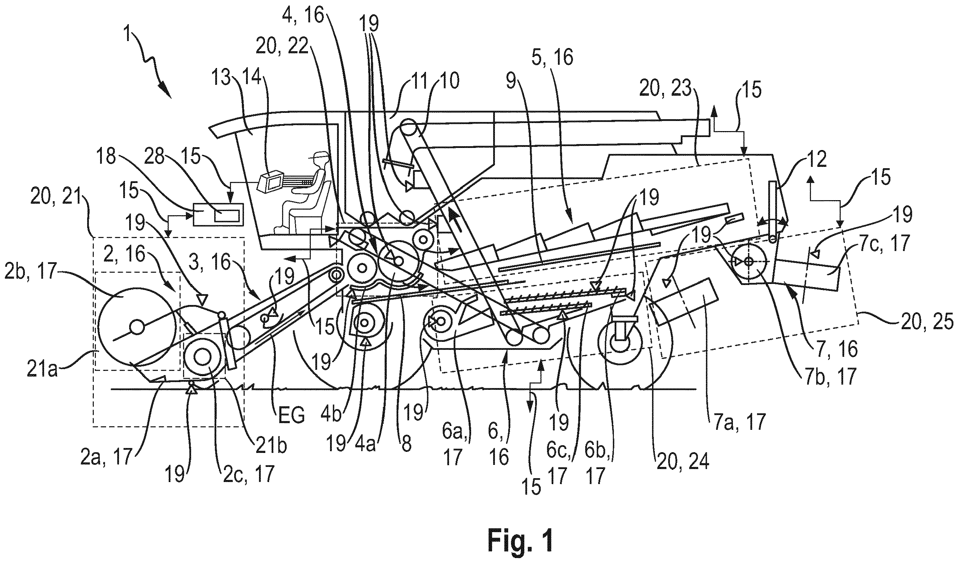

Ein in Fig. 1 schematisch dargestellter Mähdrescher 1 nimmt in seinem frontseitigen Bereich ein als Schneidwerk 2 ausgebildetes Vorsatzgerät auf, welches in an sich bekannter Weise mit einem Schrägförderer 3 des Mähdreschers 1 verbunden ist. Ein den Schrägförderer 3 durchlaufender Erntegutstrom EG wird von dem Schrägförderer 3 an eine Dreschvorrichtung 4 des Mähdreschers 2 übergeben. Von der Dreschvorrichtung 4 wird ein austretender Teilgutstrom des Erntegutstroms EG, der im Wesentlichen Nichtkornbestandteile wie Spreu und Stroh enthält, an eine als Hordenschüttler ausgeführte Trennvorrichtung 5 übergeben. Ein weiterer Teilgutstrom, der im Wesentlichen aus dem Erntegut abgeschiedene Körner enthält, gelangt von der Dreschvorrichtung 4 auf einen Förderboden 8. Es liegt im Rahmen der Erfindung, dass die Trennvorrichtung 5 auch als an sich bekannter und deshalb nicht dargestellter Trennrotor ausgeführt sein kann. Von der Trennvorrichtung 5 wird der Teilgutstrom des Erntegutsstroms EG so gefördert, dass in dem Teilgutstrom 5 enthaltene freibewegliche Körner im untenseitigen Bereich der Trennvorrichtung 5 abgeschieden werden. Sowohl die von der Dreschvorrichtung 4 als auch durch die Trennvorrichtung 5 aus dem Erntegutstrom EG abgeschiedenen Körner werden über einen Rücklaufboden 9 und Förderboden 8 einer Reinigungsvorrichtung 6 zugeführt. Von der Reinigungsvorrichtung 6 gelangt ein gereinigter Körnerstrom schließlich mittels einer Fördervorrichtung 10 in einen Korntank 11 des Mähdreschers 1.

Im rückwärtigen Bereich der als Hordenschüttler ausgeführten Trennvorrichtung 5 ist dieser eine Häcksel- und Verteilvorrichtung 7 nachgeordnet. Der Häcksel- und Verteilvorrichtung 7 wird die Trennvorrichtung 5 in ihrem rückwärtigen Bereich verlassendes Stroh zugeführt, welches wahlweise direkt auf dem Boden in einem Schwad abgelegt oder von der Häcksel- und Verteilvorrichtung 7 zerkleinert und vorzugsweise im Wesentlichen über die Breite des Vorsatzgerätes 2 verteilt auf dem Boden ausgebracht wird. Für eine Ablage des Strohs auf dem Boden ist eine sogenannte Strohklappe 12 vorgesehen, durch welche das Stroh an der Häcksel- und Verteilvorrichtung 7 vorbei umgelenkt wird.

Das als Getreideschneidwerk ausgebildete Vorsatzgerät 2 umfasst einen oszillierend angetriebenen Messerbalken 2a, eine positionsveränderliche Haspel 2b sowie eine Einzugsschnecke 2c. Die Dreschvorrichtung 4 umfasst zumindest eine drehzahlvariabel antreibbare Dreschtrommel 4a, welche untenseitig abschnittsweise von zumindest einem Dreschkorb 4b ummantelt ist. Bevorzugt ist die Dreschvorrichtung 4 als ein Mehrtrommeldreschwerk ausgebildet. Der Abstand des Dreschkorbes 4b zu der zumindest einen Dreschtrommel 4a ist veränderbar. Die Öffnungsweite des Dreschkorbes 4b ist veränderbar. Die Reinigungsvorrichtung 6 weist ein drehzahlvariables Gebläse 6a, eine neigungsveränderliche Siebanordnung mit zumindest einem Obersieb 6b und einem Untersieb 6c auf. Das Obersieb 6b und das Untersieb 6c werden oszillierend angetrieben und weisen Sieböffnungen veränderlicher Öffnungsweite auf. Die Häcksel- und Verteilvorrichtung 7 umfasst eine Spreufördereinrichtung 7a, eine drehzahlvariabel antreibbare Häckseleinrichtung 7b sowie eine Verteileinrichtung 7c. Bevorzugt ist die Verteileinrichtung 7c als Radialverteiler ausgebildet. Die Häckseleinrichtung 7b umfasst eine rotierend angetriebene Messertrommel sowie eine positionsveränderbare Gegenmesseranordnung. Die Spreufördereinrichtung 7a ist als Spreuwurfgebläse, welches die Spreu der Verteileinrichtung 7c zuführt, um gemeinsam mit dem gehäckselten Stroh von der Verteileinrichtung 7c verteilt zu werden, oder als Spreuverteilgebläse, welche die Spreu unmittelbar auf dem Boden verteilt, betreibbar.

Das Vorsatzgerät 2, die Dreschvorrichtung 4, die Trennvorrichtung 5, die Reinigungsvorrichtung 6 sowie die Häcksel- und Verteilvorrichtung 7 werden nachfolgend verallgemeinernd als Arbeitsorgane 16 bezeichnet, die der Durchführung von arbeitsorganspezifischen Teilbearbeitungsprozessen eines Gesamtbearbeitungsprozesses dienen. Die nicht abschließend aufgezählten Komponenten 2a, 2b, 2c, 4a, 4b, 6a, 6b, 6c, 7a, 7b, 7c der Arbeitsorgane 16 werden nachfolgend verallgemeinernd als Erntegutbehandlungsmittel 17 bezeichnet.

Weiter verfügt der Mähdrescher 1 über eine Fahrerkabine 13, in der zumindest eine grafische Benutzerschnittstelle 14 angeordnet ist, welche an ein Bussystem 15 des Mähdreschers 1 angeschlossen ist. Ein Fahrerassistenzsystem 18 kommuniziert durch das Bussystem 15 in an sich bekannter Weise mit der grafischen Benutzerschnittstelle 14 sowie einer Vielzahl von Sensorsystemen 19. Einzelheiten bezüglich der Struktur der Sensorsysteme 19 sind detailliert in der Offenlegungsschrift DE 101 47 733 A1 beschrieben, auf deren Inhalt hiermit vollumfänglich Bezug genommen wird, sodass im Folgenden die Struktur der Sensorsysteme 19 nicht nochmals beschrieben wird.

Das Fahrerassistenzsystem 18 ist zur Ansteuerung der Arbeitsorgane 16 vorgesehen, wobei es eine Bedienperson des Mähdreschers 1 bei der Optimierung der Einstellung der Arbeitsorgane 16 unter Berücksichtigung von Erntebedingungen unterstützen soll. Hierzu bilden das Vorsatzgerät 2, die Dreschvorrichtung 4, die Trennvorrichtung 5, die Reinigungsvorrichtung 6 sowie die Häcksel- und Verteilvorrichtung 7 jeweils gemeinsam mit dem Fahrerassistenzsystem 18 einen autonomen arbeitsorganspezifischen Einstellautomaten 20. Als Einstellautomaten 20 sind ein Vorsatzgeräteautomat 21, ein Dreschautomat 22, ein Trennautomat 23, ein Reinigungsautomat 24 sowie ein Verteilautomat 25 vorgesehen. Jeder der Einstellautomaten 20 kann Unterautomaten aufweisen, welche der autonomen Ansteuerung von verschiedenen Erntegutbehandlungsmitteln 17 eines Arbeitsorgans 16 dienen. So kann der Vorsatzgeräteautomat 20 zwei Unterautomaten umfassen, einen Haspelautomaten21 a, welcher der Ansteuerung der Haspel 2b dient, sowie einen Einzugsautomaten 21b, welcher der Ansteuerung der Einzugsschnecke 2c dient. Durch das Fahrerassistenzsystem werden mit den jeweiligen zur Durchführung von Teilbearbeitungsprozesse vorgesehenen Arbeitsorganen 16 eigenständig arbeitende Einstellautomaten 20 gebildet, welche der Optimierung der Ansteuerung der Arbeitsorgane 16 zur Durchführung der Teilarbeitsprozesse dienen. Teilbearbeitungsprozesse des Vorsatzgerätes 2 sind die Gutannahme durch die Haspel 2b sowie Abförderung des Erntegutstroms EG durch die Einzugsschnecke 2c. Teilbearbeitungsprozesse von Dreschvorrichtung 4, Trennvorrichtung 5, Reinigungsvorrichtung 6 sowie Häcksel- und Verteilvorrichtung 7 sind entsprechend insbesondere das Dreschen, Trennen, Reinigen sowie Häckseln- und Verteilen des Erntegutstroms EG.

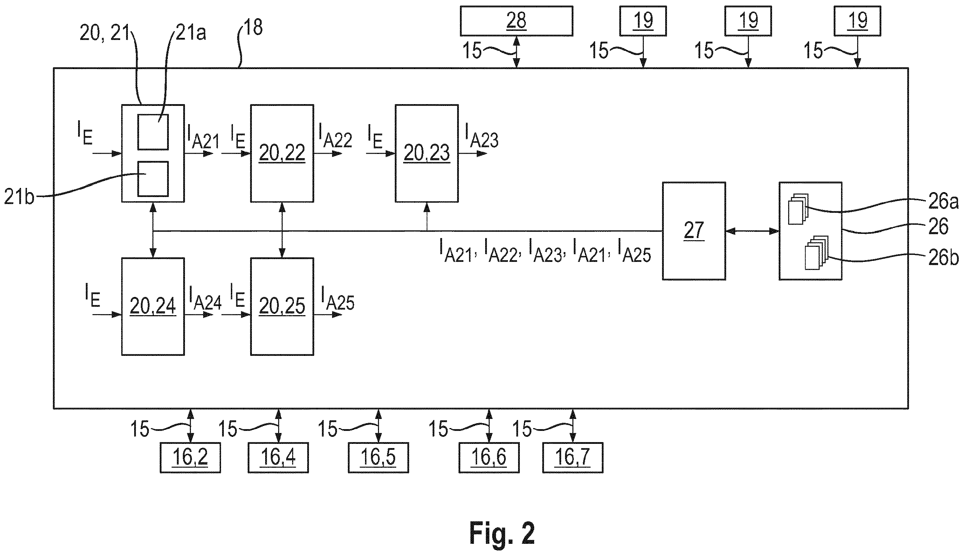

In Fig. 2 ist schematisch das Funktionsprinzip der Einstellautomaten 20 dargestellt. Das Fahrerassistenzsystem 18 umfasst einen Speicher 26 sowie eine Rechenvorrichtung 27 zur Verarbeitung von in dem Speicher 26 hinterlegten Daten. Von den Sensorsystemen 19 erfasste Daten der einzelnen Arbeitsorganen 16 bzw. ihrer Erntegutbehandlungsmittel 17 werden dem jeweiligen Einstellautomaten 20 als Eingangsdaten I_{E} zur Verfügung gestellt. Die Einstellautomaten 20 generieren autonom jeweils arbeitsorganspezifische Ausgangsdaten I_{A21}, I_{A22}, I_{A23}, I_{A24}, I_{A25}, welche zu einer Änderung von Einstellparametern der zugehörigen Arbeitsorgane 16 bzw. ihrer Erntegutbehandlungsmittel 17 verwendet werden. Die arbeitsorganspezifischen Ausgangsdaten I_{A21}, I_{A22}, I_{A23}, I_{A24}, I_{A25} werden von dem Fahrerassistenzsystem 18 dabei nicht nur dem jeweiligen spezifischen Einstellautomaten 20 sondern auch allen anderen Einstellautomaten 20 zur Verfügung gestellt.

In dem Speicher 26 sind zur Durchführung des Gesamtbearbeitungsprozess des Mähdreschers 1 Ernteprozessstrategievorgaben 26a auswählbar hinterlegt. Die Ernteprozessstrategievorgaben 26a sind mittels der grafischen Benutzerschnittstelle 14 darstellbar und auswählbar. Als auswählbare Ernteprozessstrategievorgaben 26a kommen beispielsweise das Erzielen eines maximalen Durchsatzes, eine zu erreichende Qualität des bearbeiteten Erntegutes hinsichtlich Sauberkeit und/oder Bruchkornanteil, ein effizienter Betrieb des Mähdreschers 1 und dergleichen mehr in Betracht. Zur Ausbildung der Einstellautomaten 20 durch das Fahrerassistenzsystem 18 und das jeweilige Arbeitsorgan 16 sind jeweils eine Vielzahl von Teilstrategien 26b in dem Speicher 26 auswählbar hinterlegt. Die jeweilige für einen Einstellautomaten 20 ausgewählte Teilstrategie 26b wird von der Rechenvorrichtung 27 umgesetzt, indem diese die Einstellparameter autonom ermittelt und dem entsprechenden Arbeitsorgan 16 vorgibt.

Zur Abbildung funktionaler Zusammenhänge eines von dem jeweiligen Arbeitsorgan 16 durchzuführenden Teilbearbeitungsprozesses ist mindestens einem Prozessqualitätsparameter zumindest ein adaptives Kennlinienfeld zugeordnet. Dabei ist dieser mindestens eine Prozessqualitätsparameter als Ausgangsgröße des zumindest einen Kennfeldes definiert. Anhand dieses funktionalen Zusammenhangs eines Systemmodells für das jeweiliges Arbeitsorgan 16 wird von den Einstellautomaten 20 in Abhängigkeit von den unterschiedlichen Betriebssituationen jeweils auf Einstellparameter der Arbeitsorgane 16 geschlossen, die eine optimierte Durchführung des jeweiligen Teilbearbeitungsprozesses ermöglichen. Zur zyklischen Adaption der Kennlinienfelder werden die von den Sensorsystemen 19 erfassten Daten verwendet.

Das Fahrerassistenzsystem 18, welches mit den jeweiligen zur Durchführung der Teilbearbeitungsprozesse vorgesehenen Arbeitsorgane 16 eigenständig arbeitende Einstellautomaten 20 bildet, welche der Optimierung der Ansteuerung der Arbeitsorgane 16 zur Durchführung der Teilarbeitsprozesse dienen, umfasst weiterhin einen Prozesssupervisor 28. Der Prozesssupervisor 28 ist dem Fahrerassistenzsystem 18 zugeordnet. Insbesondere kann der Prozesssupervisor 28 in das Fahrerassistenzsystem 18 integriert sein. Der Prozesssupervisor 28 ist zu einer Aktivierung und Ansteuerung einzelner Einstellautomaten 20 und eines Datenaustausches der Einstellautomaten 20 untereinander eingerichtet. Dem Prozesssupervisor 28 kommt die Aufgabe zu, den Gesamtbearbeitungsprozess des Mähdreschers 1 gemäß einer ausgewählten Ernteprozessstrategievorgabe durch eine aufeinander abgestimmte Ansteuerung der einzelnen Einstellautomaten 20 autonom zu optimieren. Dies geschieht, indem der Prozesssupervisor 28 einzelne oder alle Einstellautomaten 20 anhand zumindest eines Regelungsprozesses, der als ein Regelwerk oder eine Reglerstruktur ausgeführt ist, regelt, wobei die Umsetzung im Fall des in das Fahrerassistenzsystems 18 integrierten Prozesssupervisors 28 durch die Rechenvorrichtung 27 erfolgt. Der zumindest eine Regelungsprozess zur Ansteuerung der Einstellautomaten und des Datenaustauschs durch den Prozesssupervisor ist in dem Speicher 26 hinterlegt. Der zumindest eine Regelungsprozess umfasst und berücksichtigt bestehende Abhängigkeiten zwischen Einstellparametern und Prozessqualitätsparametern der Teilbearbeitungsprozesse untereinander.

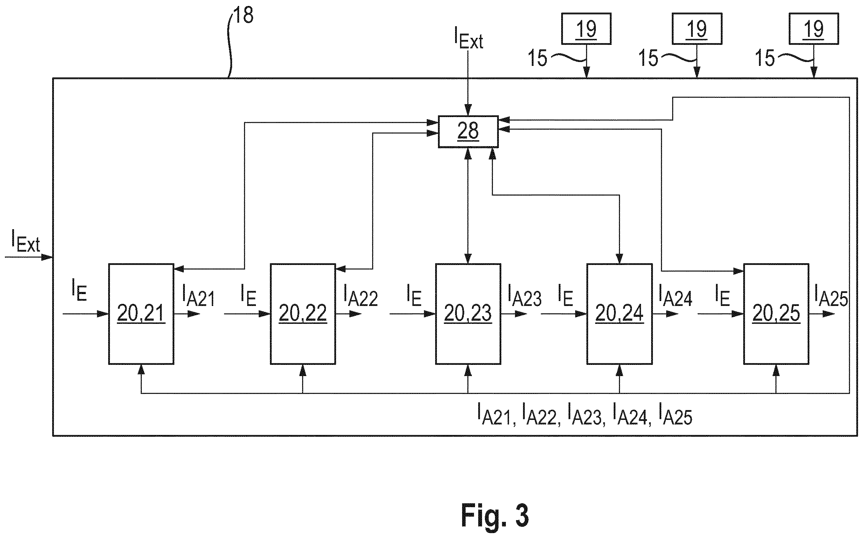

In Fig. 3 ist eine schematische Darstellung des Funktionsprinzips des Prozesssupervisors 28 gezeigt. Der Prozesssupervisor 28 koordiniert und managt die Einstellautomaten 20 in der Weise, dass eine Kommunikation der Einstellautomaten 20 zum Austausch ihrer Ausgangsdaten I_{A21}, I_{A22}, I_{A23}, I_{A24}, I_{A25} untereinander von dem Prozesssupervisor 28 veranlasst wird. Die jeweiligen Ausgangsdaten I_{A21}, I_{A22}, I_{A23}, I_{A24}, I_{A25} der Einstellautomaten 20 werden dabei entweder zunächst an den Prozesssupervisor 28 übermittelt, welcher diese an zumindest einen anderen Einstellautomaten 20 weiterleitet, oder unmittelbar an zumindest einen anderen Einstellautomaten 20 übermittelt, wobei der Prozesssupervisor 28 eine entsprechende Anweisung zur Übermittlung generiert.

Das Fahrerassistenzsystem 18 als auch der Prozesssupervisor 28 sind dazu eingerichtet, externe Daten I_{Ext} zu berücksichtigen. Insbesondere umfassen die externen Daten I_{Ext} Informationen über äußere, von den Sensorsystemen 19 des Mähdreschers 1 nicht direkt messbare Einflüsse. Externe Daten sind unter anderem aktuelle Wetterdaten sowie Logistikdaten, welche einen Einfluss auf die Durchführung des Gesamtbearbeitungsprozesses haben können. Dazu kann aber auch eine Eingabe durch die Bedienperson des Mähdreschers wie auch eine strategische Vorgabe einer den Betrieb von Erntefahrzeugen koordinierenden Person, wie einen Betriebsleiter einer Hofstelle oder eines Lohnunternehmers, zählen. Logistikdaten umfassen beispielsweise Terminvorgaben für das Abernten eines Schlages oder die Koordination des Mähdreschers 1 als einem Erntefahrzeug innerhalb einer mehrere Ernte- und Transportfahrzeuge umfassenden Erntelogistickette. Hierzu ist der Prozesssupervisor 28 respektive das Fahrerassistenzsystem 18 zum Empfang externer Daten I_{Ext} eines zentralen Flottenmanagementsystems eingerichtet, welche neben Informationen zu einem zu bearbeitenden Schlag auch Informationen über die vorhandenen Transportquantitäten enthalten. Externe Daten I_{Ext} können auch von anderen Ernte- und/oder Transportfahrzeugen übermittelt werden, die Teil der Erntelogistikkette sind. Aufgrund dessen passt der Prozesssupervisor 28 einzelne Vorgaben der Teilstrategien 26b der Einstellautomaten 20 an. So kann beispielsweise bei einer begrenzt vorhandenen Transportkapazität der Prozessqualitätsparameter "Durchsatz" des Mähdreschers 1 durch eine entsprechende Ansteuerung der Einstellautomaten 20, insbesondere des Vorsatzgeräteautomaten 21 und des Dreschautomaten 22, darauf abgestimmt werden, den Durchsatz zu reduzieren. Zugleich kann die Zielerreichung anderer Prozessqualitätsparameter, welche die Ergebnisqualität bzw. Verluste der Arbeitsorgane 16 zum Gegenstand haben, durch eine entsprechende Ansteuerung der Einstellautomaten 20 stärker berücksichtigt werden. Hierzu werden seitens des Prozesssupervisors 28 die Teilstrategien 26b autonom angepasst bzw. abweichend vorgegeben.

Darüber hinaus leitet der Prozesssupervisor 28 aus den externen Daten autonom Maßnahmen ab, welche in den Gesamtbearbeitungsprozess des Mähdreschers 1 integriert werden, um diesen möglichst optimal zu gestalten. So lassen sich beispielsweise auftretende Wartezeiten, die sich aus den externen Daten I_{Ext} zur Logistikplanung ableiten lassen, nutzen, um die Durchführbarkeit gegebenenfalls notwendige Wartungs-, Umbau- oder Einstellarbeiten der Bedienperson des Mähdreschers 1 zu signalisieren. So kann durch den Prozesssupervisor 28 beispielsweise innerhalb einer solchen Wartezeit die Durchführung einer Überprüfung und erforderlichenfalls Anpassung der Kalibrierung einzelner Sensoren der Sensorsysteme 19 vorgeschlagen werden. Ebenfalls können von dem Prozesssupervisor 28 Wartungsarbeiten vorgeschlagen werden, die lediglich bei ausgesetztem Materialfluss durch den Mähdrescher 1 oder die das Verlassen der Kabine erfordern, wie das Einstellen von Dreschkorbklappen.

Zur Optimierung des Gesamtbearbeitungsprozesses koordiniert der Prozesssupervisor 28 die Einstellautomaten 20 hinsichtlich der Durchführung der Teilbearbeitungsprozesse. Dabei ist der Prozesssupervisor 28 dazu eingerichtet, einen oder mehrere Einstellautomaten 20 koordiniert anzusteuern und betriebssituationsabhängig eine Gewichtungsverschiebung in der Erreichung oder Einhaltung von Prozessqualitätsparametern, die im Rahmen der ausgewählten Teilstrategie 26b vorgegeben werden, zumindest eines Einstellautomaten 20 durchzuführen. Hierbei wird ein suboptimaler Betrieb zumindest eines Arbeitsorgans 16 in Kauf genommen, wenn dies dem Ziel des optimierten Gesamtbearbeitungsprozesses zu Gute kommt. Neben der autonomen Vorgabe von abweichenden Teilstrategien 26b durch den Prozesssupervisor 28 lassen sich durch den Prozesssupervisor 28 auch Einstellgrenzen oder Zielwerte für die Prozessqualitätsparameter eines oder mehrerer Einstellautomaten 20 autonom verändern. So wird eine Reduzierung eines "Bruchkornanteils" als Prozessqualitätsparameter dadurch erreicht, dass der Zielwert für den Prozessqualitätsparameter "Kornanteil" in der Überkehr reduziert wird. Dies ist beispielsweise durch eine Erhöhung des Prozessqualitätsparameters "Sauberkeit" erreichbar, indem der der Reinigungsvorrichtung 6 zugeordnete Reinigungsautomat 24 einen oder mehrere Einstellparameter, wie die Sieböffnungsweite, entsprechend verändert. Ein weiteres Beispiel stellt das Absenken der Prozessqualitätsparameter "Verlustgrenze", welcher entsprechend der unterschiedlichen Arbeitsorgane 16 verschiedene Ausprägungen haben kann, bei einem Erreichen eines anderen Grenzwertes der Prozessqualitätsparameter oder der Einstellparameter, wie dem Erreichen der maximalen Motorauslastung, dar.

Der Prozesssupervisor 28 ist zudem zur Optimierung des Gesamtbearbeitungsprozesses bei einem Betrieb des Mähdreschers 1 im Teillastbetrieb eingerichtet. Wird beispielsweise der Mähdrescher 1 mit einer Fahrgeschwindigkeit auf dem abzuerntenden Feld betrieben, welche zu einem unterhalb des möglichen maximalen Durchsatzes an Erntegut liegt, während durch die Bedienperson die Ernteprozessstrategievorgabe "Maximaler Durchsatz" ausgewählt wurde, so nutzt der Prozesssupervisor 28 die verfügbaren Ressourcen der Arbeitsorgane 16, um deren Vorgaben der Teilstrategien 26b zu verändern bzw. deren Priorisierung. Im Zuge dessen lassen sich die Zielwerte für die Prozessqualitätsparameter "Verlustgrenze" oder "Bruchkornanteil" durch den Prozesssupervisor 28 verändern, um eine höhere Qualität bei der Bearbeitung des Erntegutstromes EG zu erzielen.

**Bezugszeichenliste**

| | | | |
|---|---|---|---|
| 1 | Mähdrescher | 20 | Einstellautomat |
| 2 | Vorsatzgerät | 21 | Vorsatzgeräteautomat |
| 2a | Messerbalken | 21a | Haspelautomat |
| 2b | Haspel | 21b | Einzugsautomat |
| 2c | Einzugsschnecke | 22 | Dreschautomat |
| 3 | Schrägförderer | 23 | Trennautomat |
| 4 | Dreschvorrichtung | 24 | Reinigungsautomat |
| 4a | Dreschtrommel | 25 | Verteilautomat |
| 4b | Dreschkorb | 26 | Speicher |
| 5 | Trennvorrichtung | 26a | Ernteprozessstrategievorgabe |
| 6 | Reinigungsvorrichtung | 26b | Teilstrategie |
| 6a | Gebläse | 27 | Rechenvorrichtung |
| 6b | Obersieb | 28 | Prozesssupervisor |
| 6c | Untersieb | | |
| 7 | Häcksel- und Verteilvorrichtung | EG | Erntegutstrom |
| 7a | Spreufördereinrichtung | I_{E} | Eingangsdaten |
| 7b | Häckseleinrichtung | I_{A21} | Ausgangsdaten |
| 7c | Verteileinrichtung | I_{A22} | Ausgangsdaten |
| 8 | Förderboden | I_{A23} | Ausgangsdaten |
| 9 | Rücklaufboden | I_{A24} | Ausgangsdaten |
| 10 | Fördervorrichtung | | |
| 11 | Korntank | I_{Ext} | Externe Daten |
| 12 | Strohklappe | | |
| 13 | Fahrerkabine | | |
| 14 | Benutzerschnittstelle | | |
| 15 | Bussystem | | |
| 16 | Arbeitsorgan | | |
| 17 | Erntegutbehandlungsmittel | | |
| 18 | Fahrerassistenzsystem | | |
| 19 | Sensorsystem | | |

## Patentansprüche

1. Mähdrescher (1), umfassend:
- mehrere Arbeitsorgane (16) zur Durchführung spezifischer Teilbearbeitungsprozesse eines Gesamtbearbeitungsprozesses zur Verarbeitung von Erntegut, sowie
- ein Fahrerassistenzsystem (18) zur Ansteuerung der Arbeitsorgane (16), welches einen Speicher (26) zum Hinterlegen von Daten (26a, 26b) und eine Rechenvorrichtung (27) zur Verarbeitung der im Speicher (26) hinterlegten Daten (26a, 26b) aufweist, **dadurch gekennzeichnet, dass** das Fahrerassistenzsystem (18) mit den jeweiligen zur Durchführung der Teilbearbeitungsprozesse vorgesehenen Arbeitsorganen (16) eigenständig arbeitende Einstellautomaten (20) bildet, welche der Optimierung der Ansteuerung der Arbeitsorgane (16) zur Durchführung der Teilarbeitsprozesse dienen, wobei zu einer Ansteuerung einzelner Einstellautomaten (20) und eines Datenaustausches der Einstellautomaten (20) untereinander dem Fahrerassistenzsystem (18) ein Prozesssupervisor (28) zugeordnet ist.

2. Mähdrescher (1) nach Anspruch 1, **dadurch gekennzeichnet, dass** der Prozesssupervisor (28) dazu eingerichtet ist, den Gesamtbearbeitungsprozess des Mähdreschers (1) gemäß einer Ernteprozessstrategievorgabe (26a) durch eine aufeinander abgestimmte Ansteuerung einzelner Einstellautomaten (20) autonom zu optimieren.

3. Mähdrescher (1) nach Anspruch 1 oder 2, **dadurch gekennzeichnet, dass** zur Durchführung eines jeweiligen Teilbearbeitungsprozesses mehrere unterschiedliche Teilstrategien (26b) hinterlegt sind, die von den jeweiligen Einstellautomaten (20) zur Optimierung des diesen zugeordneten Arbeitsorgans (16) heranziehbar sind.

4. Mähdrescher (1) nach einem der Ansprüche 1 bis 3, **dadurch gekennzeichnet, dass** zur Steuerung der Aktivierung und des Datenaustauschs durch den Prozesssupervisor (28) zumindest eine Regelung hinterlegt ist, welches bestehende Abhängigkeiten zwischen Einstellparametern und Prozessqualitätsparametern der Teilbearbeitungsprozesse untereinander umfasst.

5. Mähdrescher (1) nach einem der Ansprüche 1 bis 4, **dadurch gekennzeichnet, dass** der Prozesssupervisor (28) dazu eingerichtet ist, einen oder mehrere Einstellautomaten (20) koordiniert anzusteuern und betriebssituationsabhängig eine Gewichtungsverschiebung in der Erreichung oder Einhaltung von Prozessqualitätsparametern zumindest eines Einstellautomaten (20) durchzuführen.

6. Mähdrescher (1) nach Anspruch 5, **dadurch gekennzeichnet, dass** der Prozesssupervisor (28) dazu eingerichtet ist, aufgrund der Gewichtungsverschiebung den zumindest einen Einstellautomaten (20) derart anzusteuern, um das betreffende, von dem jeweiligen Einstellautomaten (20) angesteuerte Arbeitsorgan (16) außerhalb des jeweiligen optimalen Betriebspunktes zu betreiben.

7. Mähdrescher (1) nach Anspruch 5 oder 6, **dadurch gekennzeichnet, dass** der Prozesssupervisor (28) zur autonomen Vorgabe von Teilstrategien (26b) eingerichtet ist, aufgrund derer die Einstellautomaten (20) die jeweiligen Arbeitsorgane (16) ansteuern.

8. Mähdrescher (1) nach einem der vorangehenden Ansprüche, **dadurch gekennzeichnet, dass** der Prozesssupervisor (28) zur autonomen Vorgabe von Einstellgrenzen eingerichtet ist, innerhalb derer die Einstellautomaten (20) die jeweiligen Arbeitsorgane (16) ansteuern

9. Mähdrescher (1) nach einem der vorangehenden Ansprüche, **dadurch gekennzeichnet, dass** der Prozesssupervisor (28) zur autonomen Vorgabe von Zielwerten der Prozessqualitätsparameter eingerichtet ist, innerhalb derer die Einstellautomaten (20) die jeweiligen Arbeitsorgane (16) ansteuern.

10. Mähdrescher (1) nach einem der vorangehenden Ansprüche, **dadurch gekennzeichnet, dass** der Prozesssupervisor (28) zur Optimierung des Gesamtbearbeitungsprozesses bei einem Betrieb des Mähdreschers (1) im Teillastbetrieb eingerichtet ist.

11. Mähdrescher (1) nach einem der vorangehenden Ansprüche, **dadurch gekennzeichnet, dass** zur Abbildung funktionaler Zusammenhänge eines von einem Arbeitsorgan (16) durchzuführenden Teilbearbeitungsprozesses mindestens einem Prozessqualitätsparameter zumindest ein adaptives Kennlinienfeld zugeordnet ist und dass dieser mindestens eine Prozessqualitätsparameter als Ausgangsgröße des zumindest einen Kennfeldes definiert ist.

12. Mähdrescher (1) nach einem der vorangehenden Ansprüche, **dadurch gekennzeichnet, dass** der Prozesssupervisor (28) zum Empfang von externen Daten (I_{Ext}) eingerichtet ist, welche einen Einfluss auf die Prozessqualitätsparameter der Teilbearbeitungsprozesse haben.

13. Mähdrescher (1) nach Anspruch 12, **dadurch gekennzeichnet, dass** der Prozesssupervisor (28) zur autonomen Ableitung von Maßnahmen in Abhängigkeit von den empfangenen externen Daten (I_{Ext}) eingerichtet ist.

14. Mähdrescher (1) nach Anspruch 12 oder 13, **dadurch gekennzeichnet, dass** die externen Daten (I_{Ext}) Logistikinformationen einer Ernteprozesskette umfassen.

15. Mähdrescher (1) nach einem der vorangehenden Ansprüche, **dadurch gekennzeichnet, dass** als Arbeitsorgane (16) zumindest ein Vorsatzgerät (2), eine Dreschvorrichtung (4), eine Abscheidevorrichtung (5), eine Reinigungsvorrichtung (6) sowie eine Verteilvorrichtung (7) vorgesehen sind.

16. Mähdrescher (1) nach einem der vorangehenden Ansprüche, **dadurch gekennzeichnet, dass** als Einstellautomaten (20) zumindest ein Vorsatzgeräteautomat (21), ein Dreschautomat (22), ein Trennautomat (23), ein Reinigungsautomat (24) sowie ein Verteilautomat (25) vorgesehen sind.

17. Mähdrescher (1) nach einem der vorangehenden Ansprüche, **dadurch gekennzeichnet, dass** zumindest ein Einstellautomat (20) zumindest zwei Unterautomaten (21a, 21b) aufweist.
